# EUROPEAN PATENT APPLICATION

(11) **EP 4 256 948 A1**
(43) Date of publication of application: **11.10.2023**
(21) Application number: 22166728.0
(22) Date of filing: 05.04.2022
(51) Int. Cl.: A01F 15/08, A01F 15/10

(54) **A BALER DRIVELINE CONFIGURATION**

(71) Applicant: CNH Industrial Belgium N.V., 8210 Zedelgem (BE)
(72) Inventor: Bonte, Xavier G.J.M., 4505 PB Zuidzande (NL)
(74) Representative: CNH Industrial IP Department

(57) **Abstract**

The invention is related to a rectangular baler comprising a feeder unit that comprises a rotatable feeder such as the rotor (7) of a rotor/cutter unit (5). The rotation of the feeder is driven by a driveline that comprises an actively controllable slip clutch (39). According to an embodiment, the driveline comprises a sprocket and chain drive and the slip clutch (39) is mounted on a drive axle (35) whose rotation is driven by the gearbox (22) of the baler, with a first sprocket (38) rotatably mounted on the drive axle and a second sprocket (41) mounted on the feeder axle (42). The slip clutch (39) is then configured to rotationally couple the drive axle (35) to the first sprocket (38) below a given torque limit, and to decouple the drive axle from the first sprocket above said limit. The slip clutch (39) may also be located at other locations of the driveline, for example on the feeder axle (42). The slip clutch may be combined with a cutout clutch (60) on the same or on a different axle of the driveline. The method is also related to a method for re-engaging the slip clutch (39) after a blockage of the feeder, by actuating the clutch in a pulsed manner.

## Description

### Field of the Invention

The present invention is related to agricultural balers, designed for processing crops or crop residue into dense bales maintained by wires, straps or other binding materials.

### State of the art.

Agricultural balers can be either stationary machines to which crops are loaded, or either self-propelled or towable machines which pick up crops from the field and automatically process the crops into bales. In a towable rectangular baler towed on a field by a tractor, a pickup rotor picks up crops from a previously collected windrow. A feeder unit then propels the crops into a pre-compression chamber, from where consecutive wads of collected crops are evacuated into the baling chamber by a stuffer unit. In the baling chamber, the crops are compressed and formed into a rectangular bale by a reciprocating plunger.

The feeder unit comprises a rotatable feeder which may be a rotor in the case of a rotor/cutter unit or a packer shaft in the case of a packer unit.

The driveline for actuating the rotation of the rotatable feeder and other moving components of the baler generally comprises a gearbox coupled to a power take-off shaft of the towing vehicle. A configuration that is well-known includes a chain and sprocket drive between an output axle of the gearbox and the axle of the feeder, for actuating the rotation of the latter.

As a safety against damaging the driveline when the feeder becomes blocked, a releasable clutch may be included in the driveline. In presently known systems, the type of clutch that is used is typically a cutout clutch. This type of clutch is designed to disengage above a given torque level. It has been found however that short peak loads on the feeder take place quite frequently, leading to a too frequent disengagement of the cutout clutch, which may result in irregular crop gathering and cutting behaviour.

### Summary of the invention

The invention aims to provide an agricultural baler that does not suffer from the above-named problems. This aim is achieved by a baler and by a method as described in the appended claims. The present invention is related to a rectangular baler comprising a feeder unit that comprises a rotatable feeder having a rotation axle and configured to rotate about the central axis of said rotation axle. The feeder unit may be a rotor/cutter unit or a packer unit. The rotation of the feeder is driven by a driveline that comprises an actively controllable slip clutch. According to an embodiment, the driveline comprises a sprocket and chain drive and the slip clutch is mounted on a drive axle whose rotation is driven by the gearbox of the baler, with a first sprocket rotatably mounted on the drive axle and a second sprocket mounted on the feeder axle. The slip clutch is then configured to rotationally couple the drive axle to the first sprocket below a given torque limit, and to decouple the drive axle from the first sprocket above said limit. The slip clutch may also be located at other locations of the driveline, for example on the feeder axle. The slip clutch may be combined with a cutout clutch on the same axle or on another axle of the driveline. The invention is also related to a method for re-engaging the slip clutch after a blockage of the feeder, by actuating the clutch in a pulsed manner.

The controllable slip clutch enables the continued operation of the driveline even in the presence of short torque peaks. The active control allows for active coupling and decoupling of the feeder and possibly further rotating parts coupled thereto, from the main power source of the baler.

### Brief description of the figures

Figure 1 shows an overview of a rectangular baler as presently known in the art.
Figure 2 illustrates the rotor/cutter unit in a baler as presently known in the art.
Figure 3 illustrates the driveline of the rotor in a baler according to one embodiment of the invention, comprising an actively controllable slip clutch.
Figure 4 is a detail of the image shown in Figure 3.
Figure 5 illustrates another embodiment of the invention, wherein a slip clutch is combined with a cutout clutch on the same axle.
Figure 6 illustrates an embodiment of the invention, wherein the rotor axle is driven by a gearbox transmission, and wherein a controllable slip coupling is incorporated in said gearbox transmission.

### Detailed description of preferred embodiments of the invention

Preferred embodiments will now be described with reference to the drawings. The detailed description is not limiting the scope of the invention, which is defined only by the appended claims.

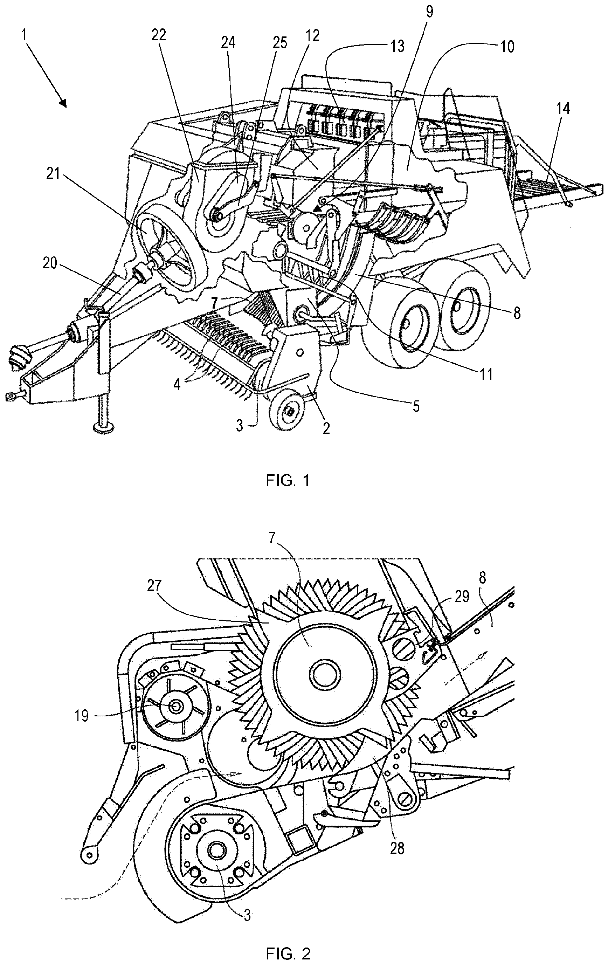

Figure 1 is a perspective cutaway view illustrating the inner workings of a towable rectangular baler 1 as presently known in the state of the art. The baler 1 has a pickup unit 2 for lifting crop material from windrows. The pickup unit 2 has a rotatable pickup roll 3 with a number of pickup tines 4 to move the collected crop rearward towards a rotor/cutter unit 5. The rotor/cutter unit 5 comprises a rotor 7 with rotor blades that push the crop towards a knife rack (not shown) for cutting the crop, and into a precompression chamber 8 to form a wad of crop material. Once the pressure in the pre-compression chamber 8 reaches a predetermined sensed value, a stuffer unit 9 moves the wad of crop from the pre-compression chamber 8 into a bale chamber 10. The stuffer unit includes stuffer forks 11 which thrust the wad of crop directly in front of a plunger 12, which reciprocates within the bale chamber 10 and compresses the wad of crop into a flake. Consecutive flakes are formed into a bale that gradually advances toward an outlet of the bale chamber 10. When enough flakes have been added and the bale reaches a predetermined size, knotters 13 are actuated which wrap and tie twine around the bale while it is still in the bale chamber 10. The twine is cut and the formed bale is ejected from a discharge chute 14 as a new bale is formed.

The above-described moving components are actuated through the rotation of a drive shaft 20 that is configured to be coupled to the power take-off shaft of a tractor (not shown). A flywheel 21 is coupled to the drive shaft 20 for ensuring its steady rotation, followed by a gearbox 22 comprising a gear transmission arrangement configured to drive the rotation of a first transverse axle (not shown) to which a pair of crank arms 24 is coupled. Through a pair of drive arms 25, the rotation of the crank arms 24 actuates the reciprocating movement of the plunger 12. The transmission arrangement may further comprise one or more additional transverse axles (not visible in Figure 1) configured to drive the pickup unit 2, the rotor/cutter unit 5 and/or the stuffer unit 9.

The driveline for driving the rotation of the rotor 7 of the rotor/cutter unit 5 will be described in more detail in the following paragraphs. The rotor/cutter unit is however just one example of a feeder unit comprising a rotatable feeder as applicable in a baler of the invention. In the embodiments shown in the drawings, the rotatable feeder is the rotor 7. Another type of feeder unit is known as a packer unit, comprising a rotatable feeder in the form of a packer. The packer is a crank shaft provided with packer teeth mounted on the eccentric crank portions of the shaft and configured to drive the crops into the precompression chamber as the crank shaft rotates. The drawings and the remainder of this detailed description are referring to a rotor/cutter unit. The description however applies also to a baler comprising a packer unit, in particular to the driveline for driving the rotation of the packer of such a unit.

Figure 2 is a more detailed side view of the main parts of a typical pickup unit and rotor/cutter unit. The pickup roll 3 is visible, as well as a guide roll 19 for guiding the crops towards the rotor 7. The blades 27 of the rotor 7 are arranged along the axis of the rotor, and shifted angularly with respect to each other. Knives 28 are arranged in a stationary knife rack for cutting the crops that are gathered by the rotor 7, and scrapers 29 are arranged for removing the crops from the rotor before they are fed into the pre-compression chamber 8. The dotted line shows the path followed by the harvested crops.

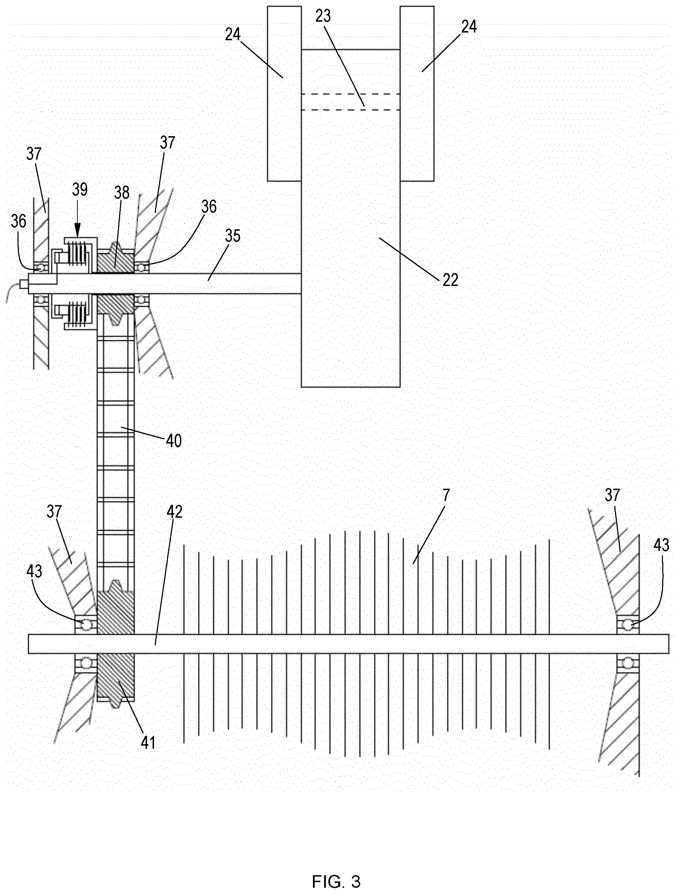

Figure 3 is a conceptual illustration of the rotor driveline in a rectangular baler in accordance with an embodiment of the invention. The gearbox 22 and the crank arms 24 with their rotation axle 23 are indicated, as well as a drive axle 35 issuing from the gearbox 22 and rotationally driven by the transmission arrangement of the gearbox. The drive axle 35 is supported by a set of roller bearings 36 mounted in a frame 37 of the baler. Roller bearings are shown by way of example only and other bearing types could be applied. At least one additional bearing (not shown) supports the axle 35 inside the gearbox 22 or in the vicinity thereof. A first sprocket 38 is rotatably coupled to the drive axle 35 through an actively controllable slip clutch 39. A drive chain 40 actively couples the first sprocket 38 to a second sprocket 41 that is fixed to the axle 42 of the rotor 7, so that the rotation of the first sprocket 38 actuates the rotation of the rotor 7 at a given speed ratio determined by the diameter ratio of the sprockets 38 and 41. The rotor axle 42 is equally supported in the frame 37 by suitable bearings 43.

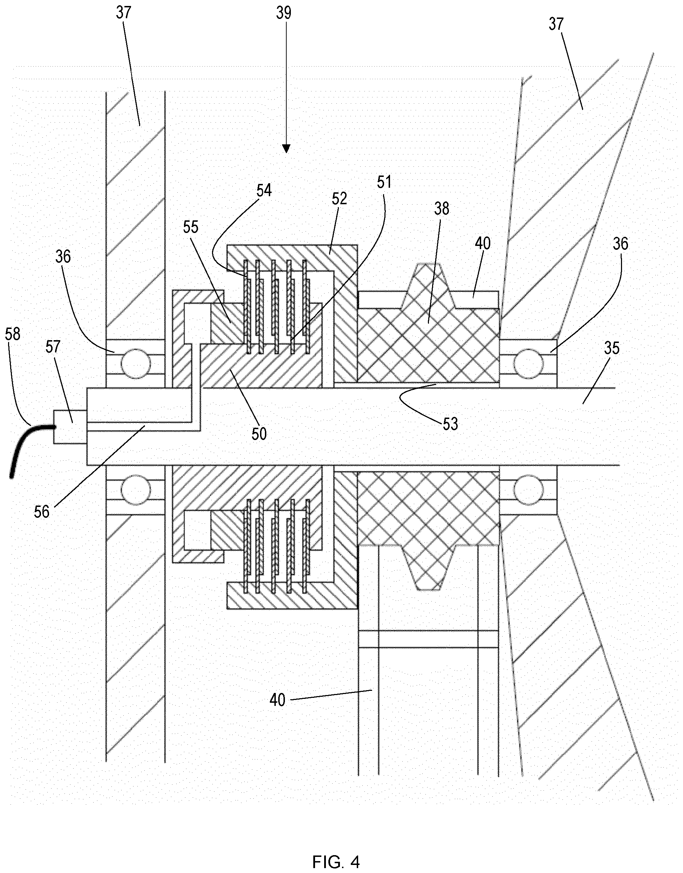

A more detailed view of the sprocket/clutch assembly is shown in Figure 4. This image is still a very conceptual representation. An actively controllable slip clutch is known as such, and any known design of this clutch type can be used in the present invention. The purpose of the conceptual drawing in Figure 4 is mainly to visualize a number of basic components as well as the interaction between the clutch 39 on the one hand and the drive axle 35 and the sprocket 38 on the other.

The slip clutch 39 comprises a first block 50 that is fixed to the axle 35, and to which a first series of friction plates 51 is rigidly attached. A second block 52 is fixed to the sprocket 38 and the assembly of the second block 52 and the sprocket 38 is rotatable relative to the axle 35 through a sliding bearing 53. The second block 52 is provided with a second series of friction plates 54 which are interspersed between the first series of friction plates 51. A piston 55 is axially displaceable relative to the first block 50. The axial displacement of the piston 55 is actuated by a hydraulic pressure generated through a supply line 56 of hydraulic fluid, the supply line 56 running inside the axle 35. A rotatable coupler 57 is attached to an external hydraulic supply line 58. Up to a given torque limit, the hydraulic pressure pushes the piston 55 from left to right as seen in the drawing, so that the piston presses the friction plates 54 of the second block 52 against the friction plates 51 of the first block 50, thereby engaging the clutch 39 so that the clutch rotationally couples the axle 35 to the sprocket 38, i.e. the first and second blocks 50 and 52 rotate as a single body, so that the sprocket 38 equally rotates at the same rotational speed as the axle 35. However, when the torque exceeds the limit, the friction forces are no longer sufficient to transfer the required torque, and the clutch slips, i.e. the sprocket 38 is rotationally decoupled from the axle 35. By increasing the hydraulic pressure, the clutch can then be made to re-engage so that the axle 35 and the sprocket 38 are re-coupled rotationally.

As the clutch 39 is actively controlled, coupling and decoupling the axle 35 and the sprocket 38 can be controlled actively by changing the hydraulic pressure supplied through the supply line 56. Active decoupling may be applied for example when the clutch slips during a significant amount of time, in order to prevent overheating of the clutch. Detection of the clutch slipping may be done by appropriate sensors, known as such in the art.

Actively disengaging the slip clutch decouples the axle 35 from the sprocket 38 as well as from any further rotating parts that are rotatably coupled to the axle 35. This enables the capability of decoupling multiple rotating parts without having to stop the gears of the main gearbox 22.

Most actively controllable slip clutches are further equipped with one or more mechanical springs designed to provide a minimal compression force between the friction plates and/or to generate a bias that separates the plates when the hydraulic pressure falls away. The conceptual representation in Figure 4 does not include such springs, but most practical implementations of the invention may include a configuration comprising one or more springs.

One advantage of including an actively controllable slip clutch in the rotor's driveline is that instantaneous torque peaks do not lead to major interruptions of the rotor's operation. Contrary to a cutout clutch, a slip clutch does not disengage or will only slip momentarily when the peak is very short, so that the rotor's operation is essentially not interrupted.

The active control of the clutch also allows to increase the clamping pressure when frequent torque peaks are detected, or when the average torque approaches the maximum transmissible torque, which may be done on the basis of signals emitted by one or more sensors, for example a load sensor on the rotor's axle 42 for determining the torque level exerted on the axle 42. Alternatively, torque levels on other rotating components of the driveline may be measured and used as input for controlling the slip clutch. The baler may then further comprise a control unit configured to receive signals from said one or more sensors and to output signals that enable controlling the slip clutch 39 on the basis of said determined torque level.

The actively controlled slip clutch 39 may be mounted at other locations of the driveline compared to the configuration shown in Figure 3. The slip clutch could for example be mounted between the axle 42 of the rotor 7 and the second sprocket 41 and arranged in the same way as illustrated in Figures 3 and 4, or between the drive axle 35 and a gear inside the gearbox 22.

A further advantage of including an actively controllable clutch in accordance with the invention is that the feeder unit can be stopped when a stuffer shearbolt breaks. Stuffer shearbolts are commonly mounted on the stuffer mechanism and are designed to break when an obstruction such as a large stone or other object enters the area in front of the stuffer forks, in order to interrupt the stuffing sequence and thereby save the mechanism from major damage. In presently known balers, the feeder unit however continues to load crops into the pre-compression chamber after a breakage of the shearbolt, which means that a large volume of crops needs to be manually removed from the pre-compression chamber before the baler can be restarted. Applying an actively controllable slip clutch in the feeder's driveline enables stopping the feeder when the stuffer mechanism is interrupted by a shearbolt breakage, by removing the clamping force on the friction plates of the clutch, for example by removing the clamping pressure in a hydraulically operated clutch. This may be done either by the operator from the cabin, following a shearbolt breakage alert, or automatically, by a control unit programmed to decouple the clutch as soon as a shearbolt breakage is detected. When the baler is started up again after replacing the shearbolt, the actively controllable clutch enables a brief operation of the stuffer mechanism without the feeder unit being active, in order to remove any remaining crops from the pre-compression chamber. After this brief period, the clutch is then activated and the feeder unit resumes its normal operation.

The invention is not limited to the use of a hydraulically operated slip clutch, but may also apply a slip clutch controlled by other means known in the art, for example an electrically operated slip clutch. The slip clutch may be a dry slip clutch or a wet slip clutch. In the first case, no lubricant is present between the friction plates. In the second case, the friction plates are mounted in a closed volume filled with an oil or other suitable lubricant. Both types of slip clutches are known as such.

The invention is also related to a method of controlling the slip clutch of any driveline configuration according to the invention. The method is applicable when a blockage of the feeder (the rotor 7 or the packer of a packer unit) occurs, that causes the slip clutch to slip and disengage. According to the method, re-engagement of the slip clutch takes place by applying a sequence of actuation pulses to the clutch, possibly after reducing the speed of the axle onto which the clutch is mounted. When a hydraulically operated clutch is used, this is realised by applying a sequence of pressure pulses to the clutch. The result is a hammering effect that mimics the way in which a cutout clutch re-engages. It is known that such a hammering effect is often beneficial for removing a blockage. However, as the hammering force cannot be controlled in a cutout clutch, the beneficial effect is not always effective and may depend on the severity of the blockage. The method of the invention provides a control of the hammering effect in terms of the length and the amplitude of the pulses, which may for example be controlled manually by the operator of the baler, or automatically on the basis of the detected output of one or more load sensors.

According to an embodiment, the above-described method of re-engaging the slip clutch is combined with the retraction of the knives 28 of the rotor/cutter unit 5 and/or with the lowering of the baler floor underneath the rotor 7. In the case of a baler equipped with a packer unit, the method may be combined with the lowering of the baler floor underneath the packer unit. Systems for retraction of the knives or lowering of the baler floor are known as such, and may be applied in a baler according to the invention. Such a baler is then furthermore equipped with a control unit that enables combining the pulsed re-engagement method of the invention with the retraction of the knives and/or the lowering of the floor.

A particular advantage of the above-described method is that the pulsed re-engagement of the active slip coupling may be done without lowering the speed of the axle onto which the clutch is mounted, whereas the use of a cutout clutch does require a speed reduction before the hammering effect can take place.

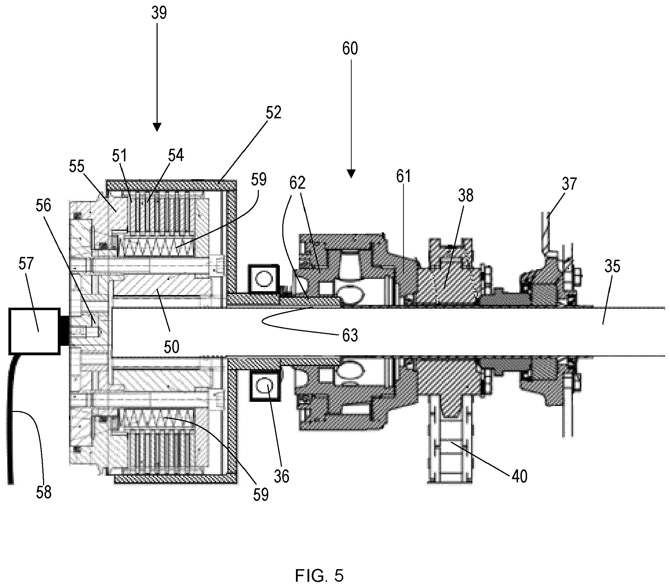

Nevertheless, the hammering impact obtainable by the above-described method applied to an actively controlled slip clutch may be lower than the impact realized by a re-engaging cutout clutch. This is why it may be advantageous to combine a slip coupling with a cutout clutch on the same axle or on another axle of the same driveline. An example of such a configuration is shown in Figure 5, this time using a more realistic representation of the slip clutch 39 as well as of the cutout clutch 60. The drive axle 35 and the sprocket 38 and chain 40 can be recognized. The cutout clutch 60 comprises a first block 61 that is fixed to the sprocket 38, and a second block 62 that remains rotatably engaged to the first block 61 through the cutout mechanism inside the clutch 60, as long as the torque does not exceed a given limit.

The construction of the slip clutch 39 is somewhat different from the conceptual drawing in Figure 4, but does represent the same functionality. The slip clutch 39 again comprises a first block 50 fixed to the axle 35, a second block 52, and a piston 55 that is axially displaceable relative to the first and second blocks 50 and 52 under the influence of a hydraulic pressure delivered through an external supply line 58, a rotatable coupler 57 and an internal supply line 56, thereby generating a compression force on the friction plates 51 and 54. Bias springs 59 are now visible also in the slip clutch 39 depicted in Figure 5.

The second block 62 of the cutout clutch 60 is fixed to the second block 52 of the slip clutch. The assembly of the blocks 52 and 62 is rotatable relative to the axle 35 through a sliding bearing 63. The bearing 36 is configured to carry the assembly of the axle 35 and the clutches 39+60 and to partly transfer the reaction force of the chain 40 to the frame 37.

When both the slip clutch 39 and the cutout clutch 60 are engaged, the rotation of the axle 35 is transferred to the sprocket 38, i.e. all parts rotate together as a single body. However the sprocket 38 is decoupled from the axle 35 when a torque limit is exceeded in the slip clutch 39 and/or in the cutout clutch 60.

A preferred way of operating the configuration shown in Figure 5 during normal operation of the baler is by applying a higher torque setting to the cutout clutch 60 than to the slip clutch 39, i.e. the cutout clutch 60 disengages at a higher torque limit than the slip clutch 39. In this way, the slip clutch is able to maintain the transfer of power despite short torque peaks for example. When a blockage occurs, the re-engagement can be done either by applying pulses to the slip coupling 39 as described above, or by allowing the cutout clutch 60 to re-engage through high-impact hammering. In the latter case, the gripping force on the friction plates of the slip coupling may then be temporarily increased in order to allow the cutout clutch to re-engage in this way. Such a configuration thereby allows maximum flexibility in terms of applying the advantages of both the slip clutch and the cutout clutch.The slip clutch 39 and the cutout clutch 60 need not be mounted on the same axle of the driveline. For example, the slip clutch 39 could be mounted on the drive axle 35 and the cutout clutch 60 on the rotor axle 42.

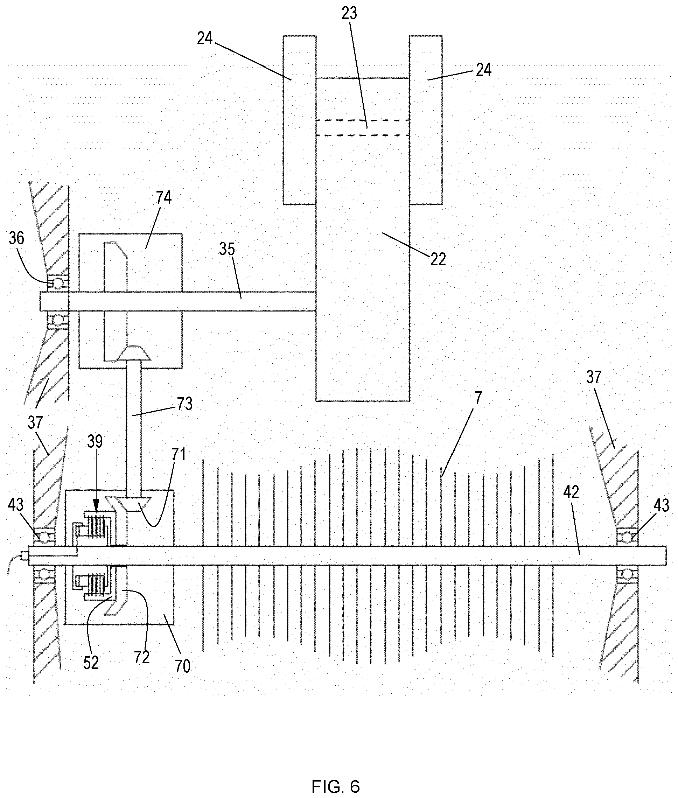

The invention is not limited to a driveline comprising a sprocket and chain drive. Figure 6 shows an example wherein the rotor axle 42 is driven through a gear transmission 70 comprising a pair of bevel gears, input gear 71 and output gear 72, and with the actively controllable slip clutch 39 incorporated in the gear transmission 70. More particularly, the second block 52 of the slip coupling 39 is fixed to the bevel gear 72 so as to couple or decouple the rotation of said bevel gear 72 to or from the rotation of the rotor axle 42. The input bevel gear 71 is mounted on a drive axle 73 that is itself driven through a further gear transmission 74 mounted on the axle 35 issuing from the main gearbox 22. The slip coupling 39 could be mounted on the drive axle 35 instead of on the rotor axle 42. In the latter arrangement or in the arrangement shown in Figure 6, the slip coupling 39 could be combined with a cutout coupling in the same manner as described above.

## Claims

1. An agricultural baler for producing rectangular bales, comprising a precompression chamber (8), a stuffer mechanism (9) for loading crops from the pre-compression chamber into a bale chamber (10), and a plunger (12) configured to reciprocate inside the bale chamber, the baler further comprising a feeder unit, the feeder unit comprising a rotatable feeder for feeding crops into the pre-compression chamber (8), and a gearbox (22) configured to transmit the rotation of an input shaft (20) to the rotation of a plurality of transverse drive axles, wherein one of said drive axles (35) is part of a driveline for driving the rotation of the feeder (7),
**characterized in that** said driveline comprises an actively controllable slip clutch (39).

2. The baler according to claim 1, wherein the driveline comprises a drive axle (35) driven by the gearbox (22), and a sprocket/chain drive comprising a first sprocket (38) mounted on the drive axle (35) and being rotatable relative to said drive axle (35), and a second sprocket (41) mounted on the axle (42) of the feeder (7), and wherein the slip clutch (39) is configured to rotationally couple the first sprocket (38) to the drive axle (35) below a given torque limit and to slip when the torque limit is exceeded.

3. The baler according to claim 1, wherein the driveline comprises a drive axle (35) driven by the gearbox (22), and a sprocket/chain drive comprising a first sprocket (38) mounted on the drive axle (35), and a second sprocket (41) mounted on the axle (42) of the feeder (7) and being rotatable relative to said feeder axle (42), and wherein the slip clutch (39) is configured to rotationally couple the second sprocket (41) to the feeder axle (42) below a given torque limit and to slip when the torque limit is exceeded.

4. The baler according to claim 1, wherein the driveline comprises a gear transmission (70,74) and wherein the controllable slip coupling (39) is incorporated in said gear transmission (70,74).

5. The baler according to claim 4, wherein said gear transmission comprises an input gear (71) and an output gear (72), with the feeder axle (42) coupled to said output gear (72), and wherein the slip clutch (39) is configured to rotationally couple the output gear (72) to the feeder axle (42) below a given torque limit and to slip when the torque limit is exceeded.

6. The baler according to any one of the preceding claims, further comprising one or more sensors suitable for determining a torque level exerted on a rotating component of the driveline, and/or one or more sensors suitable for detecting slip of the slip coupling (39), and further comprising a control unit configured to receive signals from said one or more sensors and to output signals that enable controlling the slip clutch (39) on the basis of said determined torque and/or on the basis of the detected slip.

7. The baler according to any one of the preceding claims, wherein said driveline for driving the rotation of the feeder (7) further comprises a cutout clutch (60).

8. The baler according to claim 7, wherein the cutout clutch (60) is mounted on the same axle as the slip clutch (39) and adjacent to said slip clutch.

9. The baler according to any one of the preceding claims, wherein the slip clutch (39) is a hydraulically operated slip clutch.

10. The baler according to any one of the preceding claims, wherein the rotatable feeder is a rotor (7) that is part of a rotor/cutter unit (5) of the baler.

11. The baler according to any one of claims 1 to 9, wherein the rotatable feeder is a rotatable packer that is part of a packer unit of the baler.

12. A method for re-engaging the slip clutch (39) in a baler according to any one of the preceding claims, after a disengagement of the clutch due to a blockage of the feeder (7), the method comprising the application of a sequence of actuation pulses to the slip clutch.

13. The method according to claim 12, wherein the rotatable feeder is a rotor that is part of a rotor/cutter unit comprising retractable knives and wherein the method is combined with the retraction of the knives.

14. The method according to claim 12 or 13, wherein the baler comprises a drop floor, and wherein the method is combined with the lowering of the drop floor.
